# EUROPÄISCHE PATENTANMELDUNG

(11) **EP 0 714 965 A1**
(43) Veröffentlichungstag der Anmeldung: **05.06.1996**
(21) Anmeldenummer: 95119017.2
(22) Anmeldetag: 02.12.1995
(51) Int. Cl.: C09K 3/10, C08K 3/34, C08L 7/00

(54) **Dichtungsmaterial aus Naturrohstoffen**

(30) Priorität: 02.12.1994 DE 4442878
(71) Anmelder: BBZ INJEKTIONS- UND ABDICHTUNGSTECHNIK GmbH, D-47877 Willich (DE)
(72) Erfinder: Mang, Prof. Dr. Th., D-82377 Penzberg (DE); Stuckenbruck, Uwe, D-47877 Willich (DE)
(74) Vertreter: Jönsson, Hans-Peter, Dr.Dipl.-Chem.

(57) **Zusammenfassung**

Gegenstand der Erfindung ist ein mit Wasser quellbares Dichtungsmaterial sowie ein Verfahren zu seiner Herstellung aus Naturrohstoffen, bestehend aus Naturkautschuk und Bentonit sowie gegebenenfalls anorganischem und/oder organischem Füllstoffmaterialien.

Mit Hilfe der erfindungsgemäßen Dichtungsmaterialien ist eine selbstheilende Abdichtung von Bauwerken im Hoch- und Tiefbau auf der Basis von Naturrohstoffen möglich.

## Beschreibung

Gegenstand der Erfindung ist ein mit Wasser quellbares Dichtungsmaterial aus Naturrohstoffen.

In der DE 42 26 198 A1 wird ein bei Kontakt mit Wasser quellbares Dichtungsmaterial, insbesondere zur Fugenabdichtung öder zum Ausgleich von Dimensionsänderungen im Hoch-, Tief- und Ingenieurbau oder in anderen technischen Bereichen beschrieben. Das Dichtungsmaterial ist durch Polymerisation aus einem Reaktionsgemisch von monomeren, wasserlöslichen oder wassermischbaren Acryl- und/oder Methacrylsäuren und/oder Derivaten dieser Säuren, insbesondere Amiden, Aminoester oder Hydroxyester, oder Gemischen dieser Stoffen mit den monomeren Säuren oder deren Derivaten verträglicher oder mischbarer, in Wasser dispergierter Hochpolymeren (Polymerdispersion oder Polymerlatex) herstellbar. Das Reaktionsgemisch enthält monomere, vernetzend wirkende Derivate der Acryl- und/oder Methacrylsäuren mit mehreren ungesättigten Gruppen je Mol, und der Anteil der Derivate bezogen auf die restlichen Monomere des Reaktionsge

In der EP 0 160 448 B1 werden verschiedene Ausführungsformen wasserquellbarer Zusammensetzungen beschrieben. In einer ersten Ausführungsform sind wasserquellbare Tonzusammensetzungen dadurch gekennzeichnet, daß sie im wesentlichen keinen Siliciumhaltigen Füller enthalten und wasserquellbaren Ton im Ausmaß von 35 bis 90 Gew.-% und Polypropylen, Polybuten oder Mischung dieser Substanzen in einem Ausmaß von 10 bis 65 Gew.-% umfassen. Darüber hinaus können die Zusammensetzungen zusätzlich ein Elastomer in einem Ausmaß von 1 bis 20 Gew.-% enthalten.

In einer weiteren Ausführungsform ist eine wasserquellbare Zusammensetzung dadurch gekennzeichnet, daß sie im wesentlichen keinen Silicium-haltigen Füller enthält und wasserquellbaren Ton im Ausmaß von 35 bis 90 Gew.-%, ein Elastomer im Ausmaß von 1 bis 20 Gew.-% und Plastifizierungsmittel im Ausmaß von 2 bis 50 Gew.-% enthält, welches das genannte Elastomer zu strecken vermag.

In der EP 0 246 311 B1 wird eine wasserdichtmachende Folie oder Bahn beschrieben, die eine Membran aus wasserundurchläßigem Material und einen Überzug aus Teilchen enthält, die in Berührung mit Wasser quellbar sind, und die mit einem Klebmaterial an der Membran und den angrenzenden Teilchen angeklebt sind, wobei der Überzug mehrere Teilchenschichten dick ist. In einer bevorzugten Ausführungsform dieses Standes der Technik bestehen die Teilchen aus Natriummontmorillonit mit einer klassierten Maschengröße. Weiterhin wird in diesem Stand der Technik beschrieben, daß der Klebstoff mit dem die Natriummontmorillonit-Teilchen an die Folie geklebt werden, klebrige Feststoffe in einer Konzentration von 5 bis 100 Gew.-% enthalten kann, wobei diese aus der Gruppe bestehend aus Butylenen, Butylkautschuk, Acrylkunststoffen, Propylen-, Styrol-, Butadien-, Nitril-, Vinylkunststoffen und wasserlöslichen Cellulosederivaten, Sacchariden, Gummi und Proteinen ausgewählt sind.

Sämtliche der vorgenannten Dichtungsmaterialien enthalten mehr oder weniger große Mengen an synthetisch hergestellten Rohstoffen. So werden insbesondere synthetische Polymere, Elastomere und Plastifizierungsmittel eingesetzt.

Demgegenüber besteht die Aufgabe der vorliegenden Erfindung darin, ein mit Wasser quellbares Dichtungsmaterial zur Verfügung zu stellen, das ausschließlich aus Naturrohstoffen besteht.

Gegenstand der vorliegenden Erfindung ist daher in einer ersten Ausführungsform ein mit Wasser quellbares Dichtungsmaterial aus Naturrohstoffen bestehend aus Naturkautschuk und Bentonit.

Naturkautschuk, wie im Sinne der vorliegenden Erfindung eingesetzt wird, kommt bekanntermaßen im weißen Milchsaft (Latex) der Milchröhren zahlreicher Dikotyledonen vor und wird fast ausschließlich (zu nahezu 99 %) aus dem Latex gewonnen, der beim Anritzen der Sekundärrinde der Stämme von Kautschuk- oder Parakautschukbäumen ausfließt. Der Latex wird an Ort und Stelle mit verschiedenen Mitteln zur Gerinnung gebracht, wobei der Rohkautschuk als feste Masse von Wasser trennt. Die geronnene Masse wird zwischen zwei Walzen, die unterschiedliche Drehgeschwindigkeit haben unter Wasserzusatz gereinigt, zerrissen, gewaschen, geknetet und zu langen, etwa 1 mm dicken "Fellen" von weißem Krepkautschuk aufgerollt. Heute führt man den Latex zur Transportkostenersparnis meist in ein feines Pulver über, das nachher vulkanisiert wird.

Da die Vulkanisation des Naturkautschuks durch Schwefel allein selbst bei erhöhter Temperatur zu langsam vor sich geht, wird beim einem Rohkautschuk außer Schwefel bei der Heißvulkanisation noch Vulkanisationsbeschleuniger zugesetzt.

Bentonite im Sinne der vorliegenden Erfindung sind verunreinigte Tone, die durch Verwitterung vulkanischer Tuffe entstanden sind. Aufgrund ihre hohen Gehalts an Montmorillonit besitzen Bentonite wertvolle Eigenschaften wie Quellfähigkeit, Ionenaustauschvermögen und Thixotropie. Bekanntermaßen kann die Quellfähigkeit von Rohbentoniten durch Austausch der Erdalkalimetall- gegen Alkalimetallionen modifiziert werden, die spezifische Oberfläche durch Behandeln mit organischen Säuren und die Organophelie durch Umsetzen von Alkalimetallbentoniten mit quartären Ammoniumverbindungen erhöht werden.

Mit Hilfe der vorliegenden Erfindung ist es möglich ein wasserquellbares Dichtungsmaterial allein aus Naturrohstoffen herzustellen, das neben den Bestandteilen Naturkautschuk und Bentonit keine weiteren insbesondere toxischen Additive und/oder Kleber enthalten muß.

Die erfindungsgemäßen Dichtungsmaterialien weisen gegenüber bekannten Dichtungsmaterialien aus Bentonit, insbesondere Natriumbentonit, der mit modifiziertem Butylkautschuk als Bindemittel zu einem plastisch verformbaren Profil mit geringer Eigenfestigkeit geformt wird, eine erhöhte Gelfestigkeit auf. Die im Stand der Technik bekannten Bentonit-Dichtungsprofile quellen bei ungehindertem Zutritt von Wasser sehr stark auf, wobei das entstandene Bentonitgel schließlich zerfällt. Demgegenüber ist das erfindungsgemäße Dichtungsmaterial universell einsetzbar und weist eine Vielzahl von Vorteilen auf. Das erfindungsgemäße Dichtungsmaterial auf der Basis von Naturkautschuk und Bentonit quillt bei Kontakt mit Wasser leicht und schnell und besitzt auch im gequollenen Zustand eine hohe Gelfestigkeit. Diese Eigenschaften werden über lange Zeiträume beibehalten, wobei das Dichtungsmaterial auch bei häufigen Naß-/Trocken-Zyklen seine Quellfähigkeit nicht verliert. Darüber hinaus kann das Dichtungsmaterial zu einer Vielzahl von Anwendungsformen, beispielsweise als weichflexiblen oder harten Profilen verarbeitet werden.

Bei Verwendung des erfindungsgemäßen mit Wasser quellbaren Dichtungsmaterials in an sich bekannten Abdichtungssystemen paßt sich die Abdichtung der eingebrachten Grundform, insbesondere den Fugenformen aufgrund des hohen Quellvermögens sehr schnell an. Der Durchtritt von Wasser wird dadurch sicher, meist schon in einem frühen Stadium des Schadens verhindert. Wird das Dichtungsmaterial als Fugenprofil eingesetzt, paßt sich dieses Profil Volumenänderungen, beispielsweise des Baukörpers durch Quellung bei Wasserkontakt an. Entstehende Setzrisse im Bereich des Fugenprofils heilen durch die schnelle, starke und kontrollierte Quellung selbstständig.

Das erfindungsgemäße Dichtungsmaterial aus Naturrohstoffen findet vorteilhaft Anwendung auch zur Abdichtung wasserführender Risse oder Spalten in Baukonstruktionen oder im Berg- oder Tunnelbau.

In einer besonders bevorzugten Ausführungsform der vorliegenden Erfindung wird das Gewichtsverhältnis von Naturkautschuk zu Bentonit im Verhältnis von 1 : 1 bis 1 : 10, insbesondere 1 : 2 bis 1 : 5 eingestellt. Je nach den Erfordernissen der Praxis, insbesondere nach dem Erfordernis der gewünschten Quellfähigkeit, wird das Gewichtsverhältnis von Naturkautschuk zu Bentonit innerhalb des genannten Bereiches größer oder kleiner eingestellt. Wird die Menge an Bentonit gegenüber Naturkautschuk zu klein gewählt, so ist das Quellvermögen des Dichtungsmaterials nicht ausreichend. Auch wird ein Teil des Bentonits vom Naturkautschuk vollständig umschlossen, so daß dieses Material dem Wasserkontakt entzogen ist. Wird andererseits die Menge an Bentonit zu hoch gewählt, so ist eine ausreichende Formstabilität des Dichtungsmaterials, insbesondere im gequollenem Zustand nicht zu erwarten. Vielmehr vermindert sich die Gelfestigkeit des Dichtungsmaterials, so daß derartige Bentonitdichtungsprofile bei weiterem ungehindertem Zutritt von Wasser sehr stark aufquellen, wobei das entstandene Bentonitgel schließlich zerfällt und das Quell- und Dichtungsmaterial samt Bentonit anschließend durch Wasser ausgeschwämmt wird, so daß eine sichere Abdichtung nicht gewährleistet werden kann.

In einer besonders bevorzugten Ausführungsform der vorliegenden Erfindung beträgt das Gewichtsverhältnis von Naturkautschuk zu Bentonit 1 : 4, da mit einem so gewählten Gewichtsverhältnis eine besonders geeignete Quellrate mit einer hohen mechanischen Formstabilität des Dichtungsmaterials vereint wird.

Obwohl das erfindungsgemäße, mit Wasser quellbare Dichtungsmaterial aus Naturrohstoffen und somit ausschließlich aus Naturkautschuk und Bentonit hergestellt werden kann, so ist in einer weiteren Ausführungsform der vorliegenden Erfindung auch der Einsatz von Additiven, insbesondere Füllstoffmaterialien auf der Basis von Naturrohstoffen nicht ausgeschlossen, sondern weiterer Gegenstand der vorliegenden Erfindung. In einer bevorzugten Ausführungsform der vorliegenden Erfindung enthält das mit Wasser quellbare Dichtungsmaterial neben Naturkautschuk und Bentonit auch silikatische Füllstoffmaterialien, insbesondere ausgewählt aus Siliciumdioxid, Silikaten, insbesondere Aluminium- und/oder Magnesiumsilikaten, Glimmer, Sand sowie andere Mineralmehle, organische Füllstoffmaterialien, insbesondere Holzmehl und/oder Ruß. Auch diese Bestandteile weisen eine Naturrohstoffbasis auf. Mit Hilfe dieser Zusatzstoffe ist die Modifizierung der Eigenschaften des Dichtungsmaterials in verschiedener Richtung möglich. Auch wenn diese Zusatzstoffe nicht mit dem eindringenden Wasser reagieren, so ist doch beispielsweise durch den Einsatz von silikatischen Füllstoffmaterialien, beispielsweise Sand, eine gezielte Einstellung der Quellbarkeit des Dichtungsmaterials möglich. Hohe Anteile an nichtquellfähigen Zusatzstoffen vermindern die Quellfähigkeit des Dichtungsmaterials und beeinträchtigen unter Umständen die Formstabilität.

In einer besonders bevorzugten Ausführungsform der vorliegenden Erfindung sind daher die mit Wasser quellbaren Dichtungsmaterialien aus Naturrohstoffen dadurch gekennzeichnet, daß die anorganischen oder organischen Füllstoffmaterialien, insbesondere die silikatischen Füllstoffmaterialien in einer Menge von 0 bis 80 Gew.-%, insbesondere 10 bis 50 Gew.-%, besonders bevorzugt 10 bis 30 Gew.-%, bezogen auf das Dichtungsmaterial, enthalten sind.

Das erfindungsgemäße Dichtungsmaterial ist in allen nur denkbaren geometrischen Formen, insbesondere in Form von Bändern, Folien oder Profilen beliebiger Geometrie herstellbar. Je nach Anwendungszweck können beispielweise Folien zur Außenabdichtung von Gebäuden oder Bänder zur Abdichtung von Fugen hergestellt werden.

Eine weitere Ausführungsform der vorliegenden Erfindung betrifft ein Verfahren zur Herstellung von wasserquellbaren Dichtungsmaterialien wie eingangs beschrieben, wobei man Naturkautschuk, Bentonit und gegebenenfalls anorganisches oder organisches Füllstoffmaterial in einem Mischwalzwerk, einem Innenmischer oder einem Mischextruder miteinander in Kontakt bringt und anschließend die Formgebung mit einer Breitschlitz- oder Profildüse durchführt.

Die Reihenfolge der Einbringung der genannten Bestandteile in das Mischwerkzeug ist von gewisser Bedeutung, insbesondere bei Herstellung des Dichtungsmaterials mit einem Mischwalzenwerk. Hier ist es vorteilhaft, beim Mischen auf dem Walzwerk zunächst den Naturkautschuk vorzulegen und dann portionsweise den Bentonit hinzuzugeben und einzumischen, da bei nichteingehaltener Reihenfolge der Bentonit durch den Spalt rieselt. Beim Einsatz von anderen Mischwerkzeugen kann es jedoch vorteilhaft sein, zunächst den Bentonit und/oder die gegebenenfalls enthaltenden Füllstoffmaterialien mit einer geringen Menge an Naturkautschuk zu versehen, um eine Bindung des Bentonits und/oder der Füllstoffmaterialien mit dem Naturkautschuk zu erhalten. Im Anschluß daran wird dann die restliche Menge zugegeben. Nach dem Durchmischen der Bestandteile, das eine Zeit von 10 Minuten bis 10 Stunden in Anspruch nehmen kann und gegebenenfalls unter Temperaturerhöhung bis auf 150°C, jedoch auch bei Raumtemperatur durchgeführt werden kann, wird die Formgebung der zähviskosen Masse durchgeführt. Hierbei bieten sich an sich bekannte Maßnahmen aus dem Stand der Technik zur Formgebung von Kunststoffen an.

In einer bevorzugten Ausführungsform der vorliegenden Erfindung wird die Mischung von Naturkautschuk, Bentonit und gegebenenfalls anorganischen und/oder organischen Füllstoffmaterialien in einem Mischwalzwerk durchgeführt und anschließend das Gemisch nach an sich im Stand der Technik bekannten Verfahren kalandriert, wodurch eine Platte, eine Folie oder ähnliche geometrische Form des Dichtungsmaterials erhalten wird.

In einer weiteren Ausführungsform der vorliegenden Erfindung wird die Mischung aus Naturkautschuk, Bentonit und gegebenenfalls vorhandenem anorganischen oder organischen Füllstoffmaterial in einem Innenmischer durchgeführt und das erhaltene Gemisch anschließend kalandriert oder unter Einsatz einer Breitschlitzdüse zur Herstellung eines Films oder einer Folie mit einer Schichtdicke von beispielsweise 1 mm bis 5 cm, insbesondere 1 bis 5 mm, extrudiert. Die notwendige Dicke richtet sich nach den statischen Erfordernissen im rohen und im gequollenen Zustand.

Eine weitere Ausführungsform der vorliegenden Erfindung besteht darin, daß man das Mischen der eingangs genannten Bestandteile in einem Mischextruder durchführt und die Formgebung mit einer Breitschlitzdüse durchführt. Mit Hilfe dieser Verfahrensvariante ist eine besonders einfache und kostengünstige Herstellungsmöglichkeit des erfindungsgemäßen, mit Wasser quellbaren Dichtungsmaterials gegeben.

Zur Herstellung von besonders ausgebilteten geometrischen Formen ist es im Sinne der vorliegenden Erfindung möglich, im Anschluß an die Extrusion, die erhaltenen Vorformen zu walzen, zu kalibrieren und gegebenenfalls unter Randbeschnitt aufzurollen.

Vorzugsweise werden die mit Wasser quellbaren Dichtungsmaterialien wie oben definiert zur selbstheilenden Abdichtung von Bauwerken im Hoch- und Tiefbau eingesetzt.

Ausführungsbeispiele:

### Beispiel 1:

Auf einem Laborwalzenwerk, Hersteller: Schwabenthan, Berlin, wobei das Verhältnis der Drehzahlen von hinterer zur vorderer Walze (Friktion) ca. 1,2 betrug wurde ein Dichtungsmaterial hergestellt. Die vordere Walze drehte mit ca. 12 U/min; Walzentemperatur: 70°C, Mastifikationszeit: 5-20 min (20 min brachte schnellste Quellung).

50 g Naturkautschuk (SMR, Uniroyal Aachen) wurde bei einer Walzenbreite von ca. 3 mm auf die Walze gegeben. Der Walzenspalt wurde so lange verengt, bis ein zusammenhängendes Fell um die vordere Walze läuft. Zum beschleunigten Mastifizieren wurde der Kautschuk wiederholt mit einem Messer eingeschnitten. (Mastifikation baute den Kautschuk ab und brachte damit die notwendige Konsistenz)

Nach der Mastifikation wurden 200 g Bentonit (aktivierter Natriumbentonit, American Colloid, mit einer Korngröße von 0,4 bis 0,63 mm) in 20 g Portionen eingemischt, wobei jeweils abgewartet wurde, bis die jeweilige Bentonitmenge vom Kautschuk aufgenommen war. Nach Beendigung der Zumischung wurde der Walzenspalt so weit geöffnet, bis der Wulst verschwand. Daraufhin wurde die Walze auf 40°C abgekühlt. Bei dieser Temperatur konnte das Fell nach dem Durchschneiden problemlos von der Walze abgelöst werden. Die so gewonnenen Felle konnten durch Kalandrieren oder Extrudieren auf gewünschte Dicken von 1 bis 5 mm (Folien) eingestellt werden.

Die erste Heizzone im Extruder hatte eine Temperatur von 125°C. Sie schmolz die Mischung und brachte sie in einen plastischen Zustand. Die folgenden zwei Heizzonen hatten eine Temperatur von 100°C. Sie hielten die Mischung im plastischen Zustand. Die vierte Heizzone und die Düse (fünfte Heizzone) wurden auf 125°C tempertiert. Da die Übergangszone (Flansch) nicht beheizbar war, wurde die Aufheizung des Flansches durch die höheren Temperaturen in der vierten und fünften Heizzone garantiert. Da ein kontinuierlicher Abzug und eine Kühlung nicht vorhanden war, wurden Exponate von ca. 50 cm Länge extrudiert.

Einzugsmöglichkeiten:
a) Zerkleinerung des Naturkautschuk-Bentonitfelles in einer Schneidmühle zu Granulat;
b) Schneiden von ca. 5 cm breiten Streifen; diese direkt in den Einzug des Extruder einführen.

### Beispiel 2:

Analog Beispiel 1 wurde unter teilweiser Substitution des Bentonits mit einer Korngröße von 0,63 bis 0,4 mm durch Quarzsand eine Kornfraktion von 0,63 bis 0,5 mm ein Dichtungsmaterial hergestellt, daß jeweils 8, 11, 15, 18 und 30 Gew.-% Sand enthielt.

Bei der Untersuchung des Quellungsverhaltens konnten festgestellt werden, daß ein Dichtungsmaterial unter Verwendung von 8 Gew.-% Sand ein Quellungsvermögen von mehr als 200 % bereits nach 7 bis 8 Tagen aufwies, während der Einsatz von 30 Gew.-% Sand in der gleichen Zeit lediglich eine Quellung des Dichtungsmaterials im Bereich von 120 bis 140 % hervorrief.

Somit ist festzuhalten, daß die Menge an Füllstoff einen außerordentlich großen Einfluß auf die Quellfähigkeit des Dichtungsmaterials aufweist.

### Beispiel 3:

Analog Beispiel 1 unter teilweiser Substitution des Bentonits durch Quarzsand verschiedener Korngrößenfraktion von 2,00 bis 1,60 mm, 1,00 bis 0,80 mm, 0,63 bis 0,5 mm, 0,32 bis 0,25 mm und 0,16 bis 0,09 mm wurde ein Dichtungsmaterial hergestellt, das jeweils 15 Gew.-% Sand enthielt. Die Kornfraktion des Bentonits entsprach dem Beispiel 2.

Bei den Versuchen zur Quellfähigkeit konnte festgestellt werden, daß unter Einsatz von feinkörnigem Sand innerhalb von 5 bis 7 Tagen eine Quellung von mehr als 250 % erreicht werden konnte, während der Einsatz einer gleichen Menge des grobkörnigen Sandes im Verlauf von 5 bis 7 Tagen lediglich zu einer Quellung von 100 % führte, die sich im Verlauf der weiteren Einwirkung auf bis zu 150 % erhöhte.

Mit Hilfe von feinkörnigem Sand ist es somit möglich, innerhalb einer kurzen Zeit eine hohe Quellrate zu erhalten.

## Patentansprüche

1. Mit Wasser quellbares Dichtungsmaterial aus Naturrohstoffen, bestehend aus Naturkautschuk und Bentonit.

2. Dichtungsmaterial nach Anspruch 1, dadurch gekennzeichnet, daß das Gewichtsverhältnis von Naturkautschuk zu Bentonit 1 : 1 bis 1 : 10, insbesondere 1 : 2 bis 1 : 5 beträgt.

3. Dichtungsmaterial nach Anspruch 1, dadurch gekennzeichnet, daß das Gewichtsverhältnis von Naturkautschuk zu Bentonit 1 : 4 beträgt.

4. Dichtungsmaterial nach Anspruch 1, dadurch gekennzeichnet, daß es anorganische und/organische Füllstoffmaterialien enthält, die ausgewählt sind aus Siliciumdioxid, Silikate, insbesondere Aluminium und/oder Magnesiumsilikat, Glimmer, Sand sowie Mineralmehlen oder Holzmehl und Ruß.

5. Dichtungsmaterial nach Anspruch 4, dadurch gekennzeichnet, daß die Füllstoffmaterialien in einer Menge von 0 bis 80 Gew.-%, insbesondere 10 bis 50 Gew.-%, bezogen auf das Dichtungsmaterial, enthalten sind.

6. Dichtungsmaterial nach einem oder mehreren der Ansprüche 1 bis 5, dadurch gekennzeichnet, daß es in Form von Bändern, Folien oder Profilen beliebiger Geometrie herstellbar ist.

7. Verfahren zur Herstellung von mit Wasser quellbarem Dichtungsmaterial nach einem oder mehreren der Ansprüche 1 bis 6, dadurch gekennzeichnet, daß man Naturkautschuk, Bentonit und gegebenenfalls anorganische und/oder organische Füllstoffmaterialien in einem Mischwalzwerk, einem Innenmischer oder einem Mischextruder miteinander in Kontakt bringt und anschließend die Formgebung durchführt.

8. Verfahren nach Anspruch 7, dadurch gekennzeichnet, daß man im Anschluß an das Mischen im Mischwalzwerk kalandriert.

9. Verfahren nach Anspruch 7, dadurch gekennzeichnet, daß man im Anschluß an das Mischen mit dem Innenmischer kalandriert oder unter Einsatz einer Breitschlitzdüse oder Profildüse extrudiert.

10. Verfahren nach Anspruch 7, dadurch gekennzeichnet, daß man im Anschluß an das Mischen mit dem Mischextruder unter Einsatz einer Breitschlitzdüse oder Profildüse extrudiert.

11. Verfahren nach Anspruch 10, dadurch gekennzeichnet, daß man im Anschluß an die Extrusion walzt, kalibriert und unter Randbeschnitt aufrollt.

12. Verwendung von mit Wasser quellbarem Dichtungsmaterial wie in einem oder mehreren der Ansprüche 1 bis 11 definiert zu selbstheilenden Abdichtung von Bauwerken im Hoch- und Tiefbau.
